# EUROPÄISCHE PATENTSCHRIFT

(11) **EP 4 029 824 B1**
(45) Veröffentlichungstag und Bekanntmachung des Hinweises auf die Patenterteilung: **06.12.2023**
(21) Anmeldenummer: 21202563.9
(22) Anmeldetag: 14.10.2021
(51) Int. Cl.: B66F 9/065, B66F 9/22, A01D 87/12, A01B 63/108, A01D 87/00

(54) **VERFAHREN ZUR ABLAGE EINES ERNTEGUTBALLENS AUF EINEM ABLAGEUNTERGRUND**
METHOD FOR PLACING A BALE OF HARVESTED MATERIAL ON A SURFACE
PROCÉDÉ DE DÉPÔT D'UNE BALLE AGRICOLE SUR UN SUPPORT DE DÉPÔT

(30) Priorität: 19.01.2021 DE 102021100984
(43) Veröffentlichungstag der Anmeldung: 20.07.2022
(73) Patentinhaber: CLAAS Tractor SAS, 78141 Velizy-Villacoublay (FR)
(72) Erfinder: Reinhardt, Alexander, 33332 Gütersloh (DE); Schulte-Uebbing, Markus, 44339 Dortmund (DE)
(74) Vertreter: CLAAS Gruppe

(56) Entgegenhaltungen:
- DE-A1- 10 006 908
- DE-A1-102007 048 697
- GB-A- 985 923
- US-A1- 2013 045 071

## Beschreibung

Die Erfindung betrifft ein Verfahren zur Ablage eines Erntegutballens entsprechend dem Oberbegriff von Anspruch 1. Ferner betrifft die Erfindung eine landwirtschaftliche Arbeitsmaschine zur Verladung von Erntegutballen entsprechend dem Oberbegriff von Anspruch 8.

Aus dem Stand der Technik sind eine Vielzahl von Verfahren und Arbeitsmaschinen zum Ablegen eines Erntegutballens der eingangsbeschriebenen Art bekannt.

Hierzu wird beispielshaft die DE 10 2007 048 697 A1 betrachtet, in der eine hydraulische Hubeinrichtung beschrieben ist, die über einen steuerbaren Hydraulikzylinder verfügt und in Arbeitsmaschinen und landwirtschaftlichen Nutzfahrzeugen zum Einsatz kommt. Der Hydraulikzylinder kann entsprechend vordefinierter Drucksteuerprogramme derart eingestellt werden, dass ein Hubgestänge bzw. Arbeitswerkzeug mit einem vordefinierten Druck auf den Boden gedrückt bzw. abgesenkt wird.

Für das erfolgreiche Ablegen eines Erntegutballens ist der auf den abzulegenden Untergrund aufzubringende Druck möglichst genau einzustellen. Allerdings ist dieser Druck nicht immer gleich, sondern hängt von Randbedingungen ab, beispielsweise der Beschaffenheit des Ablageuntergrundes. In der Praxis kommt es entsprechend regelmäßig dazu, dass ein Erntegutballen zu schwach angedrückt wird und daraufhin die Ablage des Erntegutballens nicht funktioniert oder ein Erntegutballen zu stark angedrückt wird. Problematisch ist insbesondere der letztgenannte Fall, da der Erntegutballen beschädigt werden kann, insbesondere in Form einer Deformation oder einer Zerstörung der Bänder.

Der Erfindung liegt mithin die Aufgabe zugrunde, ein Verfahren zur Ablage eines Erntegutballens bereitzustellen, dass das Auftreten von Fehlbedienungen beim Ablegen der Erntegutballen minimiert wird.

Ausgehend von einem Verfahren der eingangs beschriebenen Art wird die zugrunde liegende Aufgabe erfindungsgemäß dadurch gelöst, dass zur Ablage des Erntegutballens mittels des Fahrassistenzsystems die Hubkraft, mit der der Frontlader im Zuge der Ablage betrieben wird, zumindest in Abhängigkeit von dem jeweiligen Ablageuntergrund automatisch eingestellt wird.

Für den Maschinenführer stellt insbesondere der Vorgang zum Ablegen von Erntegutballen eine besondere Herausforderung dar. Hierbei muss dieser über den Frontladebedienhebel die richtigen Drücke und Positionen einstellen, um den Erntegutballen präzise abzulegen. Eine zu große Hubkraft kann dazu führen, dass der Erntegutballen beschäftigt, insbesondere sogar zerstört wird. Hingegen führt eine zu geringe Hubkraft zum Ziehen, insbesondere Schleifen, des Erntegutballens über den Ablageuntergrund, da die Haftreibung zwischen Erntegutballen und Ablageuntergrund nicht groß genug ist, um beispielsweise Gabelzinken des Frontladers aus dem Erntegutballen herauszuziehen. Dies hat längere Ablagezeiten zur Folge, da der Ablagevorgang wiederholt werden muss, bis die Andrückkraft des Erntegutballens gegen den Ablageuntergrund und damit die wirkende Reibungskraft zwischen Erntegutballen und Ablageuntergrund, die sich proportional zu der Andrückkraft verhält, ausreichend groß ist. Ein mehrmaliges Ablegen in Verbindung mit einem Schleifen des Erntegutballens über den Ablageuntergrund führt zu Schäden am Erntegutballen. Ferner werden Erntegutballen verzugsweise aufeinander gestapelt, somit würde ein Schleifen des abzulegenden Erntegutballens auf einen Stapel von Erntegutballen zu einem erhöhten Umfallrisiko des Stapels von Erntegutballen führen.

Das manuelle Einstellen der korrekten aufzubringenden Hubkraft durch den Maschinenführer ist aufgrund der unterschiedlichen Ablageuntergründe ein fehleranfälliger Vorgang. Das automatische Einstellen der Hubkraft, angepasst an den Ablageuntergrund, stellt für den Maschinenführer, insbesondere einen unerfahrenen Maschinenführer, eine große Arbeitserleichterung dar und wirkt sich vorteilhaft auf das Auftreten von Fehlbedienungen und das gesamte Ablageverfahren aus. Entsprechend hilfreich ist die automatische Einstellung der Hubkraft im Zuge der Ablage eines Erntegutballens in Abhängigkeit vom Ablageuntergrund. Letzterer ist zu berücksichtigen, da je nach Ablageuntergrund verschiedene Reibungskoeffizienten wirken, die das Verhältnis einer jeweiligen Andrückkraft des Erntegutballens zu der maximal wirkenden Reibkraft beschreiben. Entsprechend muss ein Erntegutballen beispielsweise bei der Ablage auf einem glatten Stahlboden eines Anhängers vor dem Herausziehen von Gabelzinken stärker am Ablageuntergrund angedrückt werden als bei der Ablage auf einem anderen Erntegutballen. Die jeweilig erforderliche Hubkraft wird in Abhängigkeit dieser Gegebenheiten automatisch eingestellt.

Die erfindungsgemäße Verfahrensweise hat den Vorteil., dass weniger Schäden an den Erntegutballen selbst, deren Bändern und ein selteneres Umfallen von Erntegutballenstapeln auftritt, da falsch eingestellte Hubkräfte vermieden werden. Ferner wird der Be- und Entladevorgang beschleunigt, da durch zu gering eingestellte Hubkräfte wiederholende Be- und Entladeversuche, in dem der Erntegutballen über den Ablageuntergrund gezogen wird, minimiert werden. Auch ist ein Herantasten an eine geeignete Hubkraft, das ein Maschinenführer jedes Mal vornehmen muss, vermieden. Außerdem führ das Verwenden des Fahrassistenzsystems zum Einstellen der vordefinierten Hubkraft zu einer höheren Sicherheit an dem Verfahren beteiligter Personen, da sich der Maschinenführer während des Ablageverfahrens besser auf in der Umgebung der Arbeitsmaschine befindlicher Personen konzentrieren kann.

Vorteilhafterweise gibt ein Maschinenführer dem Fahrassistenzsystem die Art des Ablageuntergrunds für einen jeweiligen Arbeitsgang zur Ablage eines Erntegutballens vor. Hierdurch sind beliebige Wechsel des Ablageuntergrunds ohne eine erhöhte Gefahr der Fehlbedienung möglich. Abhängig vom Be- und Entladevorgang kann es nötig sein, die Erntegutballen während des Vorgangs auf unterschiedlichen Ablageuntergründen abzulegen. Da die einzustellende Hubkraft vom Ablageuntergrund abhängt, weisen wechselhafte Ablageuntergründe eine erhöhte Gefahr von Fehlbedienung auf. Das Wechseln zwischen den Ablagearten, die im Fahrassistenzsystem hinterlegt sind, minimiert das Risiko für Fehlbedienung, da der Maschinenführer lediglich den Ablageuntergrund auswählen muss und das Fahrassistenzsystem die hinterlegten Sollwerte automatisch einstellt.

In einer vorteilhaften Ausgestaltung der Erfindung sind fünf verschiedene Arten für Ablageuntergründe vorstellbar. Vorzugsweise kann der Maschinenführer zwischen zumindest diesen fünf Ablageuntergründen wählen. Für die Ablage eines Erntegutballens auf einer Stahlfläche gibt es die Art "Stahl". Soll ein Erntegutballen auf einem anderen Erntegutballen abgelegt werden, gibt es die Art "Erntegutballen". Zusätzlich gibt es für die Ablage eines Erntegutballens auf einem Acker oder Stoppelacker, die Arten "Acker" oder "Stoppeln". Außerdem gibt es die Art "Beton" für die Ablage eines Erntegutballens auf einer Betonfläche. Bei Be- und Entladevorgängen von Erntegutballen sind diese fünf Arten von Ablageuntergründen die gängigsten, sodass es insbesondere von Vorteil ist, insbesondere diese als vordefinierte Zustände zu hinterlegen.

Eine weitere vorteilhafte Ausgestaltung der Erfindung ist durch einen Referenzarbeitsgang gekennzeichnet. Dabei wird im Zuge der Ablage eines Erntegutballens in Abhängigkeit von dem jeweiligen Ablageuntergrund ein Sollwert der Hubkraft, vorzugsweise automatisch, ermittelt. Zusammen mit einer Referenzierung nach der Art des Ablagegrundes wird der ermittelte Sollwert der Hubkraft dem Fahrassistenzsystem dauerhaft zur Verfügung gestellt, insbesondere mittels Speicherung auf einem Datenspeicher. Für nachfolgende Arbeitsgänge, die die Ablage eines Erntegutballens auf einem Ablageuntergrund der gleichen Art vorsehen, kann das Fahrassistenzsystem auf den Sollwert zugreifen und diesen automatisch zum Betrieb des Frontladers einstellen. Dies ist insbesondere für neue Ablagegründe, die mehrfach zum Ablegen eines Erntegutballens genutzt werden sollen, vorteilhaft. Hierdurch können für diese Ablageuntergründe spezifische Sollwerte für die Hubkraft ermittelt, gespeichert und abgerufen werden. Einmal ermittelte und gespeicherte Sollwerte können zukünftig über die Referenz im Fahrassistenzsystem ausgewählt werden. Dies verringert das Risiko für Fehlbedienung und Schäden am Erntegutballen und steigert die Effizienz des Ablagevorgangs. Der Referenzarbeitsgang ermöglicht zudem die Kalibrierung der gewünschten Hubkraft für Ablageuntergründe, für die bereits Werte abgespeichert sind. Es kann notwendig werden, diese in Abhängigkeit herrschender Randbedingungen zu aktualisieren, beispielsweise aufgrund einer geänderten Feuchtigkeit des Ernteguts.

Eine Weiterbildung der Erfindung besteht darin, dass der Maschinenführer eine Verladestrategie wählen kann, sodass das Fahrassistenzsystem in Abhängigkeit von der gewählten Verladestrategie für aufeinanderfolgende Arbeitsgänge die für den jeweiligen Arbeitsgang nötige Hubkraft zur Ablage von Erntegutballen automatisch einstellt. Besonders vorteilhaft sind Verladestrategien, die aufeinander folgende Ablagen von Erntegutballen auf vorgegebenen Arbeitsuntergründen in einer bestimmten Reihenfolge und in einem Zyklus beinhalten. Beim Verladen von Erntegutballen werden beispielsweise zwei Erntegutballen nacheinander auf einen bereits vorhandenen Erntegutballen platziert. Diese drei Erntegutballen werden anschließend zum Transport auf einen Anhänger, der vorzugsweise eine Stahlfläche zum Ablegen aufweist, platziert. Dieser Vorgang wird zyklisch wiederholt und kann auf das Entladen von Erntegutballen übertragen werden. Auf diese Weise wird der Maschinenführer entlastet. Vor allem repetitives Arbeiten stellt eine erhöhte Fehlerquelle dar. Mittels der beschriebenen Vorgehensweise ist mithin das Risiko von Fehlbedienung und folglich von Schäden am Erntegutballen oder Anhänger verringert. Außerdem wird damit der Be- und Entladevorgang beschleunigt.

Es ist möglich, dass mindestens eine Verladestrategie von einem Maschinenführer konfigurierbar und/oder mindestens eine Verladestrategie voreingestellt ist. Hierdurch kann sich der Maschinenführer auf vorhandene, vordefinierte Verladestrategien nutzen oder falls nötig neue, beliebige Verladestrategien konfigurieren. Analog zu der oben aufgeführten Verladestrategie von drei Erntegutballen auf einen Anhänger ist es möglich, dass der Ablageuntergrund des Anhängers nicht aus Stahl, sondern aus Holz besteht. Die vordefinierte Verladestrategie sieht eine Ablage der drei Erntegutballen auf Stahl vor, sodass diese für den Verladevorgang nicht genutzt werden kann. Allerdings kann der Maschinenführer eine neue Verladestrategie konfigurieren, die als Ablageuntergrund für den Anhänger Holz vorsieht. Hierdurch wird das Risiko von Fehlbedienung reduziert und der Verladevorgang optimiert.

Betreffend das Fahrassistenzsystem kann eine Ausgestaltung vorteilhaft sein, in der ein Feuchtigkeitswert des jeweiligen Erntegutballens ermittelt wird, sodass die automatische Einstellung der Hubkraft entsprechend dieses Werts angepasst wird. Dies ist insbesondere während oder nach Regen bzw. Wetter mit hoher Luftfeuchtigkeit relevant, da der Erntegutballen Feuchtigkeit speichert, die das Gewicht des Erntegutballens vergrößert und insbesondere die Reibeigenschaften des Erntegutmaterials verändern können. Entsprechend dem gemessenen Feuchtigkeitswert kann das zusätzliche Gewicht ermittelt werden. Somit ist eine geringere Hubkraft notwendig, um den Erntegutballen mit dem gleichen Druck, wie im trockenen Zustand, auf den Boden zu drücken, sofern notwendig. Dieser Druckunterschied wird von dem Fahrassistenzsystem automatisch ermittelt und die Hubkraft dementsprechend angepasst.

Das Verfahren der oben beschriebenen Art wird besonders vorteilshaft mittels einer landwirtschaftlichen Arbeitsmaschine, die ein Fahrassistenzsystem aufweist, das zur Durchführung des Verfahrens nach einem der vorherigen Ansprüche eingerichtet ist, gelöst. Die Vorteile dieser Ausführung ergeben sich analog zu den oben aufgeführten.

Die landwirtschaftliche Arbeitsmaschine umfasst einen Frontlader mit einer Arbeitshydraulik sowie einem Fahrassistenzsystem. Das Fahrassistenzsystem erlaubt zumindest einen teilautomatisierten Betrieb des Frontladers inklusive der Arbeitshydraulik bei der Ablage eines Erntegutballens. Der Betrieb der Arbeitshydraulik des Frontantriebs erfolgt vorzugsweise über einen vom Maschinenführer bedienten Joystick in der Fahrerkabine. Die zumindest Teilautomatisierung des Frontladerbetriebs entlastet den Maschinenführer und minimiert somit das Risiko für Fehlbedienungen. Der Frontlader kann insbesondere mit einem als Ladegabel ausgebildeten Anbauwerkzeug ausgestattet sein, das mindestens zwei Gabelzinken umfasst. Mittels einer solchen Ladegabel lassen sich insbesondere Erntegutballen besonders gut verladen.

Die Erfindung ist nachstehend anhand eines Ausführungsbeispiels, das in den Figuren dargestellt ist, näher erläutert. Es zeigt:
- Fig. 1:: Eine schematische Darstellung einer landwirtschaftlichen Arbeitsmaschine mit Frontlader, welcher einen Erntegutballen in zwei verschiedenen Positionen hält,
- Fig. 2:: Den Ablagevorgang von zwei Erntegutballen, die auf zwei unterschiedliche Ablageuntergründe,
- Fig. 3:: Einen Teilschritt einer Verladestrategie.

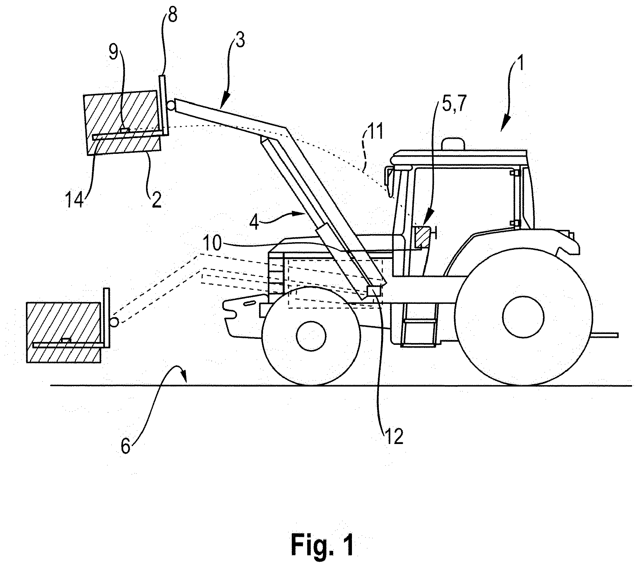

In der **Figur 1** ist eine landwirtschaftliche Arbeitsmaschine **1,** die einen Frontlader **3,** eine Arbeitshydraulik **4,** sowie ein Fahrassistenzsystem **5** umfasst, abgebildet. An dem Frontlader **3,** der über ein Gelenk **12** mit der landwirtschaftlichen Arbeitsmaschine **1** verbunden ist, ist ein Anbauwerkzeug **8** mit daran angeordneten Gabelzinken **14** angebracht. Das Anbauwerkzeug **8** dient zum Aufnehmen von Gegenständen, insbesondere eines Erntegutballens **2,** wobei die Gabelzinken **12** einen formschlüssigen Kontakt mit dem aufzunehmenden Gegenstand aufweisen. Insbesondere werden die Gabelzinken **14** in den Erntegutballen **2** hineinbewegt, insbesondere gestochen, sodass dieser angehoben werden kann. Die Arbeitshydraulik **4,** welche über das Fahrassistenzsystem **5** mit Datenspeicher **7,** das in einer Fahrerkabine der Arbeitsmaschine **1** angeordnet ist, gesteuert wird, dient zum Anheben und Absenken des Erntegutballens **2.** Die Arbeitshydraulik **4** und das Anbauwerkzeug **8** verfügen über jeweils eine eigene Datenleitung **10, 11** zu dem Fahrassistenzsystem **5,** wodurch diese steuerbar sind.

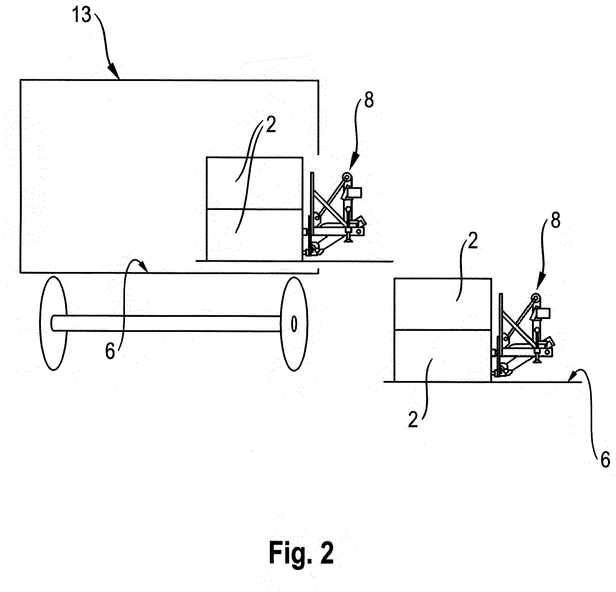

Zum Durchführen eines Ablageverfahrens des Erntegutballens **2** wird dieser über die Arbeitshydraulik **4** des Frontladers **3** in Richtung des Ablageuntergrunds **6** bewegt. Damit die Gabelzinken **14** bei Kontakt zwischen dem Erntegutballen **2** und dem Ablageuntergrund **6** aus dem Erntegutballen **2** gezogen werden können, muss die Reibung zwischen Erntegutballen **2** und Ablageuntergrund **6** größer sein als die Reibung zwischen den Gabelzinken **14** und dem Erntegutballen **2.** Die Reibung zwischen dem Erntegutballen **2** und dem Ablageuntergrund **6** kann über eine Hubkraft des Frontladers **3,** mit der der Erntegutballen **2** auf den Ablageuntergrund **6** gedrückt wird, gesteuert werden. Die Art des Ablageuntergrunds **6** ist maßgeblich für die aufzubringende Hubkraft. Da der Erntegutballen **2** auf verschiedene Ablageuntergründe **6,** insbesondere Stahl, (Stoppel-)Acker, Beton oder einen anderen Erntegutballen **2** abgelegt werden soll, ist das Einstellen der zum Ablageuntergrund **6** passenden Hubkraft von zentraler Bedeutung, um Beschädigungen des Erntegutballens **2** zu verhindern und zeiteffizientes Ablegen zu erreichen. Um Fehlbedienungen bei dem Ablagevorgang zu verhindern, kann der Maschinenführer über das Fahrassistenzsystem **5** in der Fahrerkabine zwischen verschieden Arten für Ablageuntergründe **6** auswählen. Hierdurch wird ein im Datenspeicher **7** hinterlegter Sollwert für die Hubkraft für den jeweiligen Ablageuntergrund **6** automatisch eingestellt. **Figur 2** zeigt das Ablegen von zwei aufeinander gestapelten Erntegutballen **2,** die von einem Anbauwerkzeug **8** gehalten werden, auf einem beliebigen Ablageuntergrund **6,** sowie auf einem Anhänger **13.** Dabei ist der Ablageuntergrund **6** des Anhängers **13** vorzugsweise aus Stahl, wobei auch andere Materialen als Ablageuntergrund **6** möglich sind.

Neben dem Ablageuntergrund **6** ist die aufzubringende Hubkraft von der Feuchtigkeit des Erntegutballens **2** anhängig. Erntegutballen **2** bestehen vorzugsweise aus Heu, Stroh oder angewelktem Grüngut, sodass diese bei Regen und hoher Luftfeuchte viel Flüssigkeit speichern, wodurch sich das Eigengewicht des Erntegutballens **2** verändert. Gleichzeitig verändert dies auch die Reibung zwischen Erntegutballen **2** und Ablageuntergrund **6,** wodurch der einzustellende Sollwert der Hubkraft angepasst werden sollte. Um Fehlbedienungen unter diesen Bedingungen zu verhindern, weisen die Gabelzinken **14** einen Feuchtigkeitssensor **9** auf. Der Feuchtigkeitssensor **9** ermittelt nach Eindringen in den Erntegutballen **2** den Feuchtigkeitswert und gibt diesen über eine Datenleitung **11** des Anbauwerkzeugs **8** zum Fahrassistenzsystem **5** weiter. Das Fahrassistenzsystem **5** passt den Sollwert der Hubkraft entsprechend dem ermittelten Feuchtigkeitswert an.

Es ist möglich, dass der Erntegutballen **2** auf einen Ablageuntergrund **6,** der nicht im Datenspeicher **7** des Fahrassistenzsystems **5** hinterlegt ist, abgelegt werden soll. Insbesondere bei einer Mehrzahl von Ablagen ist es von Vorteil, den für den Ablageuntergrund **6** nötigen Sollwert der Hubkraft einmalig zu ermitteln und im Datenspeicher **7** des Fahrassistenzsystems **5** zu hinterlegen. Dieser Sollwert ist fortan unter einer Referenzierung entsprechend der Art des Ablageuntergrunds **6** im Fahrassistenzsystem **5** als wählbare Art von Ablageuntergründen **6** verfügbar. Eine Aktualisierung dieses Sollwerts, beispielsweise infolge sich ändernder Randbedingungen, ist denkbar.

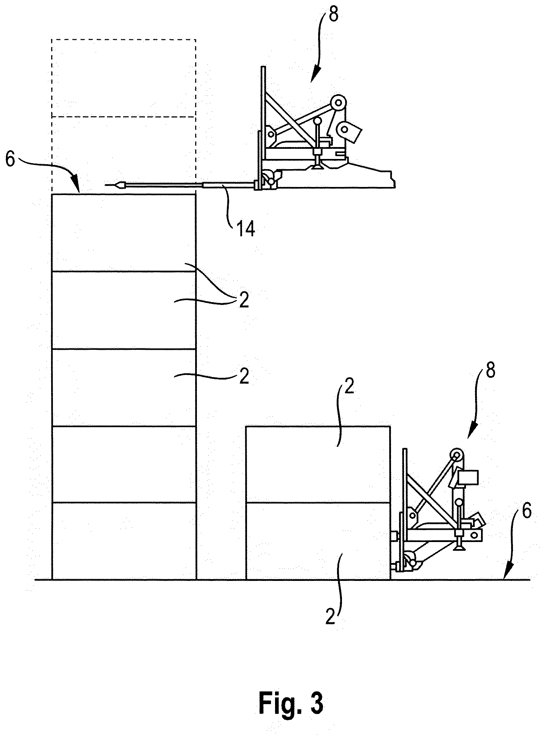

Das Be- und Entladen von Erntegutballen **2** stellt mitunter einen zyklischen Vorgang dar. Denkbar wäre z.B. der folgenden Verladevorgang: Ein Erntegutballen **2** wird aufgenommen und auf einen bereits vorhandenen Erntegutballen **2** abgelegt. Anschließend werden die beiden Erntegutballen **2** aufgenommen und auf einen Ablageuntergrund **6,** z.B. eine Anhänger **13** abgelegt. Anschließend beginnt der Vorgang von neuem. Für die Auswahl der Arten von Ablageuntergründen **6** würde dies z.B. die Abfolge "Erntegutballen", "Stahl" in zyklischer Abfolge bedeuten. Die Auswahl dieser Verladestrategie erleichtert den Ladevorgang, da der Maschinenführer nicht bei jedem Erntegutballen **2** erneut den Ablageuntergrund **6** individuell auswählen muss, sondern das Fahrassistenzsystem **5** entsprechend des gewählten Zyklus automatisch den richtigen Ablageuntergrund **6** für eine jeweilige Ablage eines Erntegutballens **2** auswählt. Ferner wäre es möglich, nachdem eine Grundfläche des Anhängers **13** mit Erntegutballen **2** bedeckt ist, weitere Erntegutballen **2** auf die bereits bestehenden Erntegutballen **2** zu stapeln. Um Fehlbedienungen bei solchen repetitiven Verladestrategien zu verhindern, gibt es für den Maschinenführer die Möglichkeit, vordefinierte Verladestrategien auszuwählen oder beliebige Verladestrategien zu konfigurieren. Ein solcher Verladevorgang ist in **Figur 3** zu erkennen. Zuerst werden Stapel bestehend aus zwei Erntegutballen **2** gebildet und diese anschließend aufeinander gestapelt.

### Bezugszeichenliste

- 1: Arbeitsmaschine
- 2: Erntegutballen
- 3: Frontlader
- 4: Arbeitshydraulik
- 5: Fahrassistenzsystem
- 6: Ablageuntergrund
- 7: Datenspeicher
- 8: Anbauwerkzeug
- 9: Feuchtigkeitssensor
- 10: Datenleitung
- 11: Datenleitung
- 12: Gelenk
- 13: Anhänger
- 14: Gabelzinken

## Patentansprüche

1. Verfahren zur Ablage eines Erntegutballens (2) auf einem Ablageuntergrund mittels einer landwirtschaftlichen Arbeitsmaschine (1), die Arbeitsmaschine (1) umfassend
- einen Frontlader (3),
- eine Arbeitshydraulik (4) zur Aufbringung einer Hubkraft zum Betreib des Frontladers (3),
- ein Fahrassistenzsystem (5) zum zumindest teilautomatisierten Betrieb des Frontladers (3) im Zuge der Ablage des Erntegutballens (2),
**dadurch gekennzeichnet, dass**
zur Ablage des Erntegutballens (2) mittels des Fahrassistenzsystems (5) die Hubkraft, mit der der Frontlader (3) im Zuge der Ablage betrieben wird, zumindest in Abhängigkeit von dem jeweiligen Ablageuntergrund (6) automatisch eingestellt wird.

2. Verfahren nach Anspruch 1, **dadurch gekennzeichnet, dass** für einen jeweiligen Arbeitsgang zur Ablage eines Erntegutballens (2) dem Fahrassistenzsystem (5) die Art des Ablageuntergrunds (6) von einem Maschinenführer vorgegeben wird.

3. Verfahren nach Anspruch 2, **dadurch gekennzeichnet, dass** als Arten für Ablageuntergründe (6)
i) "Stahl" für die Ablage eines Erntegutballens (2) auf einer Stahlfläche;
ii) "Erntegutballen" für die Ablage eines Erntegutballens (2) auf einem anderen Erntegutballen (2);
iii) "Acker" für die Ablage eines Erntegutballens (2) auf einem Acker;
iv) "Stoppeln" für die Ablage eines Erntegutballens (2) auf einem Stoppelacker; und/oder
v) "Beton" für die Ablage eines Erntegutballens (2) auf einer Betonfläche;
auswählbar ist bzw. sind.

4. Verfahren nach einem der vorhergehenden Ansprüche, **dadurch gekennzeichnet, dass** in einem Referenzarbeitsgang in Abhängigkeit von dem jeweiligen Ablageuntergrund (6) im Zuge einer Ablage des jeweiligen Erntegutballens (2) ein Sollwert der Hubkraft, vorzugsweise automatisch, ermittelt und dem Fahrassistenzsystem (5) referenziert nach der Art des Ablageuntergrunds (6) dauerhaft zur Verfügung gestellt wird, insbesondere mittels Speicherung auf einem Datenspeicher (7), wobei das Fahrassistenzsystem (5) für nachfolgende Arbeitsgänge, die die Ablage eines Erntegutballens (2) auf einem Ablageuntergrund (6) gleicher Art vorsehen, auf den Sollwert zugreift und diesen automaisch zum Betrieb des Frontladers (3) einstellt.

5. Verfahren nach einem der vorhergehenden Ansprüche, **dadurch gekennzeichnet, dass** das Fahrassistenzsystem (5) in Abhängigkeit einer vom Maschinenführer ausgewählten Verladestrategie für aufeinanderfolgende Arbeitsgänge zur Ablage von Erntegutballen (2) für die Arbeitsgänge jeweils eine Hubkraft automatisch einstellt, wobei vorzugsweise die Verladestrategie aufeinander folgende Ablagen von Erntegutballen (2) auf vorgegebenen Ablageuntergründen (6) in einer bestimmten Reihenfolge und in einem Zyklus beinhaltet.

6. Verfahren nach Anspruch 5, **dadurch gekennzeichnet, dass** mindestens eine Verladestrategie von einem Maschinenführer konfigurierbar und/oder mindestens eine Verladestrategie voreingestellt ist.

7. Verfahren nach einem der vorhergehenden Ansprüche, **dadurch gekennzeichnet, dass** ein Feuchtigkeitswert des jeweiligen Erntegutballens (2) erfasst wird, wobei das Fahrassistenzsystem (5) die automatische Einstellung der Hubkraft zusätzlich in Abhängigkeit von dem erfassten Feuchtigkeitswert vornimmt.

8. Landwirtschaftliche Arbeitsmaschine (1) zur Verladung von Erntegutballen (2), insbesondere in Form eines Traktors, umfassend
- einen Frontlader (3),
- eine Arbeitshydraulik (4) zur Aufbringung einer Hubkraft zum Betreib des Frontladers (3),
- ein Fahrassistenzsystem (5) zum zumindest teilautomatisierten Betrieb des Frontladers (3) im Zuge der Ablage des Erntegutballens (2) auf einem Ablageuntergrund (6),
**dadurch gekennzeichnet, dass**
das Fahrassistenzsystem (5) zur Durchführung des Verfahrens nach einem der vorhergehenden Ansprüche eingerichtet ist.

## Claims

1. A method for placing a bale of harvested material (2) on a placement substrate by means of an agricultural working machine (1), the working machine (1) comprising
- a front loader (3),
- working hydraulics (4) for the application of a lifting force in order to operate the front loader (3),
- a driver assistance system (5) for the at least semi-automated operation of the front loader during the course of placing the bale of harvested material (2),
**characterized in that**
in order to place the bale of harvested material (2) by means of the driver assistance system (5), the lifting force with which the front loader (3) is operated during the course of the placement is automatically adjusted as a function of at least the respective placement substrate (6).

2. The method according to claim 1, **characterized in that**, for a respective operation for placing a bale of harvested material (2), the type of placement substrate (6) is specified to the driver assistance system (5) by a machine operator.

3. The method according to claim 2, **characterized in that**:
i) "steel" for placing a bale of harvested material (2) on a steel surface;
ii) "harvested material bales" for placing a bale of harvested material (2) on another bale of harvested material (2);
iii) "field" for placing a bale of harvested material (2) on a field;
iv) "stubble" for placing a bale of harvested material (2) on a stubble field; and/or
v) "concrete" for placing a bale of harvested material (2) on a concrete surface;
can be selected as the types of placement substrate or substrates (6)

4. The method according to one of the preceding claims, **characterized in that** a nominal value for the lifting force is determined, preferably automatically, in a reference operation as a function of the respective placement substrate (6) during the course of a placement of the respective bale of harvested material (2) and referenced, according to the type of placement substrate (6), made permanently available to the driver assistance system (5), in particular by means of storage in a data memory (7), wherein for subsequent operations which envisage placing a bale of harvested material (2) on a placement substrate (6) of the same type, the driver assistance system (5) accesses the nominal value and adjusts it automatically in order to operate the front loader (3).

5. The method according to one of the preceding claims, **characterized in that** for consecutive operations for the placement of bales of harvested material (2), the driver assistance system (5) automatically sets a respective lifting force for the operations as a function of a loading strategy selected by the machine operator, wherein preferably, the loading strategy involves the consecutive placement of bales of harvested material (2) on specified placement substrates (6) in a specific sequence and in a cycle.

6. The method according to claim 5, **characterized in that** at least one loading strategy can be configured by a machine operator and/or at least one loading strategy is preset.

7. The method according to one of the preceding claims, **characterized in that** a moisture value for the respective bale of harvested material (2) is detected, wherein the driver assistance system (5) additionally carries out the automatic adjustment of the lifting force as a function of the detected moisture value.

8. An agricultural working machine (1) for loading bales of harvested material, in particular in the form of a tractor, comprising
- a front loader (3),
- working hydraulics (4) for the application of a lifting force in order to operate the front loader (3),
- a driver assistance system (5) for the at least semi-automated operation of the front loader during the course of placing the bale of harvested material (2),
**characterized in that**
the driver assistance system (5) is configured to carry out the method according to one of the preceding claims.

## Revendications

1. Procédé de dépose d'une balle de produit récolté (2) sur un support de dépose au moyen d'une machine de travail agricole (1), la machine de travail (1) incluant
- un chargeur frontal (3),
- une hydraulique de travail (4) pour exercer une force de levage pour l'actionnement du chargeur frontal (3),
- un système d'assistance à la conduite (5) pour le fonctionnement au moins partiellement automatisé du chargeur frontal (3) au cours de la dépose de la balle de produit récolté (2),
**caractérisé en ce que**
pour la dépose de la balle de produit récolté (2) au moyen du système d'assistance à la conduite (5), la force de levage avec laquelle le chargeur frontal (3) est actionné au cours de la dépose est réglée automatiquement au moins en fonction du support de dépose respectif (6).

2. Procédé selon la revendication 1, **caractérisé en ce que**, pour une opération respective de dépose d'une balle de produit récolté (2), le type du support de dépose (6) est prescrite au système d'assistance à la conduite (5) par un conducteur de machine.

3. Procédé selon la revendication 2, **caractérisé en ce qu'**est, respectivement sont sélectionnables comme types de supports de dépose (6)
i) « acier » pour la dépose d'une balle de produit récolté (2) sur une surface en acier ;
ii) « balle de produit récolté » pour la dépose d'une balle de produit récolté (2) sur une autre balle de produit récolté (2) ;
iii) « labour » pour la dépose d'une balle de produit récolté (2) sur un labour ;
iv) « chaume » pour la dépose d'une balle de produit récolté (2) sur un champ en chaume ; et/ou
v) « béton » pour la dépose d'une balle de produit récolté (2) sur une surface en béton.

4. Procédé selon une des revendications précédentes, **caractérisé en ce que**, dans une opération de référence, en fonction du support de dépose respectif (6), au cours d'une dépose de la balle de produit récolté respective (2), une valeur de consigne de la force de levage est déterminée, préférentiellement automatiquement et mise durablement à la disposition du système d'assistance à la conduite (5) de manière référencée en fonction du type du support de dépose (6), en particulier au moyen d'une mémorisation sur une mémoire de données (7), le système d'assistance à la conduite (5) accédant à la valeur de consigne pour des opérations successives qui prévoient la dépose d'une balle de produit récolté (2) sur un support de dépose (6) de même type et adoptant celle-ci automatiquement pour le fonctionnement du chargeur frontal (3).

5. Procédé selon une des revendications précédentes, **caractérisé en ce que** le système d'assistance à la conduite (5) adopte automatiquement une force de levage respectivement pour des opérations successives de dépose de balles de produit récolté (2) en fonction d'une stratégie de manutention sélectionnée par le conducteur de machine, la stratégie de manutention renfermant préférentiellement des déposes successives de balles de produit récolté (2) sur des supports de dépose prescrits (6) dans un ordre déterminé et selon un cycle.

6. Procédé selon la revendication 5, **caractérisé en ce qu'**au moins une stratégie de manutention est configurable par un conducteur de machine et/ou au moins une stratégie de manutention est préréglée.

7. Procédé selon une des revendications précédentes, **caractérisé en ce qu'**une valeur d'humidité de la balle de produit récolté respective (2) est détectée, le système d'assistance à la conduite (5) effectuant aussi le réglage automatique de la force de levage en fonction de la valeur d'humidité détectée.

8. Machine de travail agricole (1) pour la manutention de balles de produit récolté (2), en particulier en forme de tracteur, incluant
- un chargeur frontal (3),
- une hydraulique de travail (4) pour exercer une force de levage pour l'actionnement du chargeur frontal (3),
- un système d'assistance à la conduite (5) pour le fonctionnement au moins partiellement automatisé du chargeur frontal (3) au cours de la dépose de la balle de produit récolté (2) sur un support de dépose (6),
**caractérisée en ce que**
le système d'assistance à la conduite (5) est agencé pour réaliser le procédé selon une des revendications précédentes.
